# EUROPEAN PATENT APPLICATION

(11) **EP 3 279 846 A1**
(43) Date of publication of application: **07.02.2018**
(21) Application number: 16001691.1
(22) Date of filing: 01.08.2016
(51) Int. Cl.: G06Q 20/30, G06Q 20/32, G06Q 20/40

(54) **METHOD AND SYSTEM FOR WIRELESS PAYMENTS USING A WEARABLE DEVICE**

(71) Applicant: Giesecke+Devrient Mobile Security GmbH, 81677 München (DE)
(72) Inventor: Kähkönen, Mikko, 80337 München (DE)

(57) **Abstract**

The present invention is directed towards a method for securely performing wireless payments being triggered by a wearable device, which can be performed efficiently regarding hardware requirements. The present invention is further directed towards a communication protocol implementing the suggested method steps as well as a system for performing secure wireless payments using a wearable device. The invention is furthermore directed towards a computer program product comprising instructions implementing the suggested method steps and operating the suggested system.

## Description

The present invention is directed towards a method for securely performing wireless payments being triggered by a wearable device, which can be performed efficiently regarding hardware requirements. The present invention is further directed towards a communication protocol implementing the suggested method steps as well as a system for performing secure wireless payments using a wearable device. The invention is furthermore directed towards a computer program product comprising instructions implementing the suggested method steps and operating the suggested system.

US 2014 052640 A1 shows a method of establishing security and authentication credentials for secure communication between a wallet service center and a cluster of electronic wallet transaction facilities provided at a user device.

According to the prior art newly developed computer devices are provided, which are implemented using a minimum of hardware capacities. So-called wearable devices are computing devices of every day's life which are enhanced by a microprocessor and respective memories. This may be suitable for tracking fitness exercises such as jogging, where a pulse rate is detected. Typically such devices are of light weight as they need to be carried around by the user all the day. Consequently, such devices hold only a minimum of components at least for the comfort of the user.

A further aspect of such commonly known devices is that they must not be highly power consuming as the respective battery is typically of low capacity and needs to be charged every day or at least every second day. Hence, there is a requirement for efficiently implementing such hardware devices comprising only a specific number of components which are essential for providing the required functionality.

These wearable devices are typically manufactured in large capacities at a reasonable price. This also leads to the conclusion that only those components being effectively required are to be provided by the manufacturer. In case additional components would be involved the weight as well as the energy consumption would rise. Consequently, there are several application domains which cannot be handled by such known devices. To be able to address each and every application domain such mobile devices would have to comprise every thinkable component for getting involved in every application scenario. Consequently, such devices are specifically tailored to single application domains, such as fitness tracking for instance. Consequently, all components being not required for fitness tracking are omitted in such devices.

Commonly known methods apply mobile devices for user authentication. Such an authentication process may be performed using biometric sensors. For instance, it is commonly known to provide a fingerprint to a smartphone identifying the respective user. Such a provided fingerprint is compared to a further stored fingerprint and thereupon a device can be unlocked. However, there is a disadvantage as for such an application an additional fingerprint sensor needs to be applied. Such a sensor at least raises the manufacturing costs for the mobile phone.

The payments industry is increasingly looking into solutions for making innovative wearable devices available for cardholders to make contactless proximity payments. In pursuing options for this goal, many institutions are raising questions about managing the expenditure particular in environments where online authorization is not possible, as well as expressing concerns above the fact that these transactions are carried out without any cardholder verification. A wearable device typically has no feature allowing for cardholder verification, and contactless payment terminals typically do not cater for reception of an authorization response which could reset expenditure counters in the payment application in a wearable device.

A further application of the solution could be to use the biometric as a user verification method for large ticket purchases, to be paid by a wearable device.

Consequently, it is an object of the present invention to provide a method which allows a wearable device to take part in several application domains without requiring a large variety of hardware components. Accordingly, such a device shall only be composed of a minimum of components leading to low manufacturing costs and low energy consumption. It is furthermore an object of the present invention to provide a respective communication protocol along with a system for performing secure payments by means of a wearable device. It is further an object of the present invention to provide a respective computer program product.

The object is solved by a method comprising the subject matter of independent claim 1. Further advantages are provided by the dependent claims.

Accordingly, a method for performing secure wireless payments using a wearable device is suggested. The method comprises the steps of triggering a payment transaction wirelessly by the wearable device, whereupon a transaction request and an authentication request is transmitted from a payment terminal to the wearable device, whereby a verification metric is provided indicating whether the following steps are to be performed. Namely, forwarding at least the authentication request to a further mobile device comprising at least one biometric sensor, and accomplishing biometric verification by the further mobile device and transmitting the verification result to the payment terminal.

The present invention provides the advantage that a wearable device can trigger a payment transaction including biometric verifications, wherein the wearable devices needs not to comprise a biometric sensor. Consequently, there is a technical consideration regarding the hardware efficiency of the wearable device. The wearable device can participate in a mobile payment system without the necessity to be adapted regarding the hardware requirements. Such a sensor can be provided by a further device, which holds such a sensor anyway. Accordingly, the wearable device can be coupled with a smartphone, and can use the components being provided by such a smartphone. The manufacturer needs not to install biometric sensors into the wearable device and can hence provide the wearable device at a reasonable price. Furthermore, the biometric sensor does not consume energy from the perspective of the wearable device itself. As a smartphone typically comprises a larger battery capacity compared to the wearable device computing steps can be performed by the smartphone.

There is a further technical consideration regarding the hardware capacities of the wearable device. This is the case as it is suggested to firstly evaluate a verification metric. Such a verification metric comprises rules, which indicated whether a biometric verification needs to be carried out or not. Accordingly, there may be cases, where such a verification is not necessary and therefore the respective computing steps can be omitted. This leads to further hardware efficiency and a lower energy consumption of the wearable device. The verification metric is evaluated in either case meaning that even a biometric verification is not to be carried out this method step is performed. Consequently, there is a contribution over the art leading to an efficient payment procedure, which is still convenient for the user. The user convenience arises as the user is provided with a light weight and energy efficient wearable device at a reasonable price. Still, the suggested method is secure as indeed biometric verification can be performed.

A wireless payment according to the present invention is any payment, which can be triggered for instance by near field communication requiring a point-of-sale terminal. Such a point-of-sale terminal may be a wireless reading device which is provided by the point-of-sale. The user may for instance use a smartwatch as a wearable device and hold such a device against the terminal. The point-of-sale terminal thereupon registers the wearable device and transmits a transaction request.

The transaction request may for instance comprise a specific amount of money to be paid. Furthermore, additional data may be provided by means of such a transaction request. This may comprise information regarding an ID of the point-of-sale terminal and may even provide information regarding the products to be bought.

Of course, the point-of-sale terminal needs to verify that the user presenting the wearable device is indeed authorized to perform such transactions. Consequently, a biometric verification is suggested which lets the point-of-sale terminal identify the user. Hence, it is possible to detect, whether the wearable device is stolen and used by a thieve. It may also be the case that the application scenario required that the wearable device itself needs to authenticate the user. This may provide a security means being implemented by the manufacturer of the wearable device. Hence, in case a wearable device is stolen this device is locked for payments as the thieve cannot authenticate himself before the point-of-sale terminal.

Consequently, it is possible to provide control instructions either on the point-of-sale terminal or the wearable device. It is also possible to use a mixed deployment providing some of the instruction on the point-of-sale terminal and further instructions on the wearable device. However, they cooperate and implement the suggested method.

Upon receiving the transaction request the provided verification metric is evaluated meaning that rules are checked which indicate, whether a biometric verification is necessary. Such a biometric verification might not be necessary in case the transaction request merely demands a small amount of money. It may furthermore be the case that only a specific number of transactions per day is possible and accordingly any further transactions are forbidden. Such considerations allow the wearable device to pay immediately or the accomplish further verification steps. In case the transaction request can be followed immediately, there is no need for performing energy consuming verification steps. Consequently, in this case the wearable device may return an acknowledgement to the point-of-sale terminal indicating that the transaction can be performed. In this way method steps are prevented which have to be performed according to known techniques.

In case the verification metric indicates that such authentication steps have to be performed the wearable device contacts the further mobile device and requires user authentication by means of at least one biometric sensor. For doing so, the wearable device forwards at least the authentication request to the further mobile device. In this way the mobile device receives the information being necessary to identify the user. The mobile device can thereupon apply the biometric sensor for instance by means of voice recording or taking an image of the user.

Regarding the biometric verification it may be also advantageous to provide additional data serving as reference data. Accordingly, such reference data can be compared to actually gathered data of the user and in case both data sets are at least similar the user is authenticated. For instance, the mobile device or the wearable device stores a fingerprint of the user and upon an authentication request requests the user to provide his fingerprint over the fingerprint sensor of the mobile device. The mobile devices compares the provided fingerprint with a stored fingerprint and may then conclude that the providing user is indeed the user who is authorized to perform transactions.

In this way hardware and energy consuming method steps can be deployed on the mobile device again resulting in hardware efficiency of the wearable device. According to the suggested method the wearable device may use any biometric sensors being provided by a further mobile device. In case no biometric verification is required it is even not necessary to contact the mobile device and perform the required transaction immediately.

In case the mobile device confirms the identity of the user, the confirmation can be provided to the point-of-sale terminal, which registers that the transaction was securely paid by means of the wearable device. It may also be possible to contact further devices, such as a bank server, which performs the demanded transaction. In case the wearable device is not connected to a telecommunications network the mobile device or the point-of-sale terminal may communicate with further devices, such as a bank server. In this way the transaction can be directly performed by the bank server and a confirmation is provided to the point-of-sale terminal. In case the biometric verification is negative, meaning that the user provides for instance a fingerprint is not the expected user a message can be provided to the wearable device or the point-of-sale terminal indicating that the procedure has terminated. It may furthermore be of advantage to provide a timeout indicating how much time a user has to perform the biometric verification. In case several attempts fail to provide the required biometric data the transaction procedure fails. It may also be of advantage to provide in addition or alternatively to the timeout a number of possible biometric verification attempts. For instance, in case the user fails to provide the required biometric data three times the authentication procedure may be terminated.

According to an aspect of the present invention the verification metric provides a set of rules indicating whether biometric verification is required regarding the specific transaction request. This provides the advantage that for each transaction request the wearable device can decide whether to perform biometric verification. Such rules may indicate payments from a specific point-of-sale terminal always require biometric verification and on the other hand that specific point-of-sale terminals are to be paid directly without any biometric verification. Hence, the suggested method may decide from case to case whether to perform biometric verification and accordingly may safe energy.

According to a further aspect of the present invention the verification metric considers a set of previous transaction requests. This provides the advantage that the transaction requests can be counted and upon reaching a specific number of transaction requests the transaction requests can be terminated meaning to avoid additional method steps. In this case it may be possible to terminate the payment procedure in case for instance five transaction requests were already received. Furthermore, it can be restricted to process further transaction requests in case a specific number of positive transaction requests are handled. Positive transaction requests are those requests which were already paid. Hence, it is possible to define that for instance only three transaction requests can be confirmed per day. This provides an additional security means and furthermore again helps to safe energy in case the transaction is terminated without any biometric verification.

According to a further aspect of the present invention the verification metric provides a threshold indicating a number of transactions and/or a transaction amount. This provides the advantage that the overall sum of money being spent on a day can be limited. Consequently, it may be the case that the user restricts his own wearable devices towards the payment of 500 Dollar per day. In case the wearable device is stolen the thieve can only perform transactions up to the specified amount independent of further biometric verifications.

According to a further aspect of the present invention the verification metric is stored in a memory of the wearable device, the payment terminal and/or the further mobile device. This provides the advantage that the manufacturer of the respective devices or the application provider of either the point-of-sale terminal or the suggested method can implement the respective instructions on at least one of the suggested devices. Accordingly, it is possible to consider the respective application domain. This is of advantage as the transaction process is at least in part performed by the wearable device, which is administrated by the user. As critical method steps are to be performed, the service provider or the manufacturer may deploy instructions on one of the devices or several of the devices. In case the manufacturer of the point-of-sale terminal implements the suggested method the critical method steps can be performed by the point-of-sale terminal. Consequently, the respective verification metric is administrated by the manufacturer himself. Consequently, there is no possibility to manipulate the verification metric, which could for instance also be stored on the wearable device. It may also be of advantage to distribute the verification metric along with respective instructions across several devices for implementing a further security means.

According to a further aspect of the present invention forwarding the verification result is performed wirelessly via the wearable device. This provides the advantage that the mobile device may use the communication interface with the wearable device, whereupon the wearable device again forwards the verification result to the point-of-sale terminal. In this case no further components are involved and the respective interface can be secured.

According to a further aspect of the present invention forwarding the verification result is performed wirelessly from the further mobile device to the payment terminal. This provides the advantage that communicating with the wearable device can be omitted and that a direct connection between the payment terminal and the mobile device can be accomplished.

According to a further aspect of the present invention forwarding the verification result is performed via a further computing device using a telecommunications network. This provides the advantage that the further computing device may be provided by a bank which directly answers the transac-. tion request. In this case the bank server may receive the verification result along with the transaction request and may perform the requested transaction and provide the payment terminal with the respective amount of money.

According to a further aspect of the present invention the biometric sensor is a camera, a fingerprint sensor, a microphone or a pulse monitor. This provides that advantage that already implemented sensors of the mobile device can be used by the wearable device. Consequently, no additional hardware is required and especially no additional hardware in the wearable device itself is required. According to the biometric sensors a biometric verification can be performed without requiring additional method steps to be performed by the wearable device.

According to a further aspect of the present invention the wearable device is a piece of clothing, a bracelet, a watch and/or a fitness tracking device. This provides the advantage that the present invention can be implemented using commonly known wearable devices, which do not need to be updated regarding the hardware requirements. It is rather the case that the wearable devices can be amended such that only the required instructions are to be loaded on such a wearable device. Afterwards the wearable device can participate regarding the suggested method and performing secure wireless payments may possible.

According to a further aspect of the present invention the further mobile device is a smartphone or a laptop computer. This provides the advantage that commonly known and typically available hardware devices are used. Hence, the user needs not to buy additional components but can rather use his commonly known wearable device and connect it to a commonly known smartphone or laptop computer. The skilled person appreciates that further hardware devices can be used, which are mobile devices.
According to a further aspect of the present invention a secure element is provided by the wearable device. This provides the advantage that specific hardware features are implemented which do not allow that the stored instructions or the verification metric is manipulated. A secure element is a specific hardware device which cannot be changed by means of software as functionality is hard coded into such a secure element. Consequently, an additional security means is provided to the wearable device.

The object is also solved by a communication protocol for performing secure wireless payments using a wearable device. The communication protocol is arranged to implement the method steps as suggested by the respective method for performing secure wireless payments.

The object is also solved by a system for performing secure wireless payments using a wearable device, comprising an interface being arranged to trigger a payment transaction wirelessly by the wearable device, whereupon a transaction request and an authentication request is transmitted from a payment terminal to the wearable device, wherein a verification metric is provided indicating whether the following steps are to be performed. Namely, forwarding at least the authentication request by means of a further interface to a further mobile device comprising at least one biometric sensor. Furthermore, a biometric device is suggested being arranged to accomplish biometric verification by the further mobile device and to transmit the verification result to the payment terminal.

The suggested interfaces, namely the interface and the further interface, can be implemented as one single interface but can as well be implemented as separate interfaces allowing several ways to communicate. Such an interface may for instance be formed by Bluetooth, near field communication or in general by a telecommunications network.

The skilled person appreciates that further hardware components can be provided which are required for implementing the suggested system. Such further components may for instance comprise network components such as a rooter or a server.

The object is also solved by a computer program product being arranged to perform the suggested method or operated the suggested system. A computer program product may also store the suggested protocol.

The skilled person appreciates that the method provides method steps which can be implemented as structural features as well. Accordingly, the suggested system provides structural features which can be implemented in accordance with their method steps and the method steps provide functionality which can as well be implemented in hardware of the suggested system. The computer program product performs the suggested method steps and at least in part operates the system for performing secure wireless payments using the wearable device.

The invention is now described with reference to the accompanying figures, which show:
- Fig. 1:: a schematic flow chart illustrating a method for performing secure wireless payments according to an aspect of the present invention; and
- Fig. 2:: a system arrangement for performing secure wireless payments according to a further aspect of the present invention.

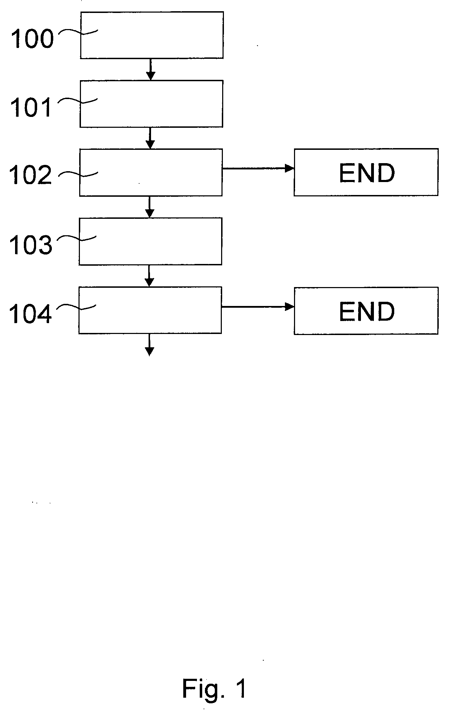

Fig. 1 shows a method for performing secure wireless payments using a wearable device, comprising the steps of triggering 100 a payment transaction wirelessly by the wearable device, whereupon a transaction request and an authentication request is transmitted 101 from a payment terminal to the wearable device, wherein a verification metric is provided indicating 102 whether the following steps are to be performed. Namely, forwarding 103 at least the authentication request to a further mobile device comprising at least one biometric sensor and accomplishing 104 biometric verification by the further mobile device and transmitting the verification result to the payment terminal. In step 102 it is decided whether biometric verification needs to be accomplished and in case this has not to be performed the method performs the required transaction. Furthermore, in case the biometric verification being accomplished in step 104 is negative, the suggested method terminates. In this case no transaction request is confirmed.

The skilled person appreciates the aforementioned method steps can be performed iteratively and/or in a different order. It may also be the case that further substeps are required.

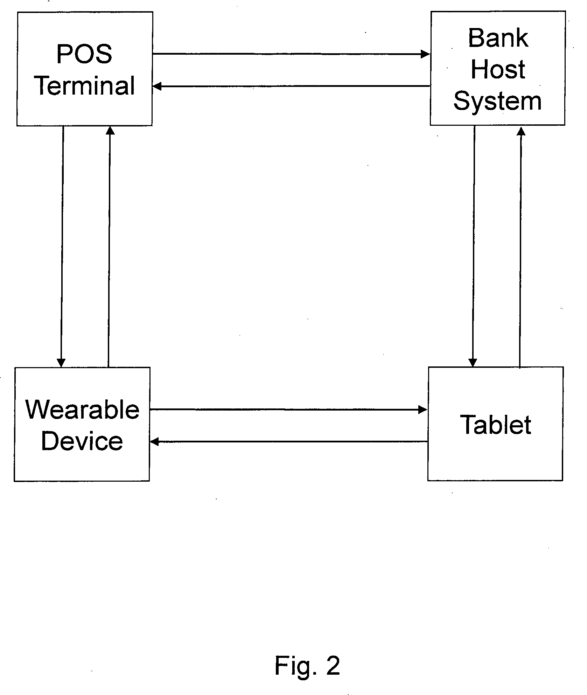

Fig. 2 shows a system for performing secure wireless payments using a wearable device. In Fig. 2 on the left top there is depicted a point-of-sale terminal at which a customer wants to perform a payment transaction using his wearable device. The wearable device is shown on the left hand side at the bottom of Fig. 2. The wearable device communicates with a companion device comprising a biometric sensor. This device is shown on the right hand side, bottom of Fig. 2. On the top right hand side of Fig. 2 a bank host system is depicted. According to the suggested system risk management can be enhanced by allowing the payment application on a wearable device to request biometric verification data of the card holder on a companion device like smartphone or tablet computer. The biometric input, for instance a fingerprint, an iris scan, a facial scan or any other supported biometric sample, is required after a number of transactions and/or accumulated spend or in the case of the transaction amount exceeds a predefined threshold. Provided that the biometric sample is a match with a verification value previously stored in the wearable device, the risk management counters could be reset.

The suggested method and system can be summarized as follows. While using a wearable for payment purposes and the wearable does not have an interface for biometric input, risk management can be enhanced by allowing the payment application on a wearable device to request biometric verification data of the cardholder on a companion device like smartphone or tablet. A payment application, or alternatively a separate application which carries out biometric data verification on behalf of the payment application, in a Secure Element on a wearable device could ask for biometric input after a number of transactions and/or accumulated spend, or in the case of the transaction amount exceeds a pre-defined threshold. The status of the application could be displayed to the device holder in an application on a companion device. The user could then start a session e. g. from a secure wallet application on the companion device, which would further start a Bluetooth -connection to the wearable device. User would then be requested to provide a biometric sample (e. g. finger print, iris scan, facial scan or any other supported biometric sample) on the companion device, which would process the sample into a format suitable for verification in the applications in the wearable device. Provided the biometric sample is a match with a verification value previously stored in the wearable device, the risk management counters could be reset.

In case the biometric would be used as user verification for large ticket items, the wearable could ask for biometric verification for a payment transaction when a pre-defined amount is exceeded. In this case the application on the wearable would request the user to provide a biometric sample for further processing and in case of a positive match, payment can be authorized and processed.

There is no need to integrate a biometric reader in the wearable device itself, which allows for lower cost of materials for the device. Whilst the wearable is affordable it still allows for highly secure transaction for end users and lower risks for issuing organizations. The combination of a wearable and a companion device for the objective of strong user verification makes use of existing infrastructure in many mobile pones and tablets already capable to perform biometric data capture and processing.

Summarizing the above method, a protocol and a system along with a respectively arranged computer program product is suggested allowing the wearable device to decide whether to perform biometric verification and thereupon save energy and hardware capacities in case biometric verification is not required.

## Claims

1. A method for performing secure wireless payments using a wearable device, comprising the steps:
- triggering (100) a payment transaction wirelessly by the wearable device, whereupon a transaction request and an authentication request is transmitted (101) from a payment terminal to the wearable device, **characterized in that** a verification metric is provided indicating (102) whether the following steps are to be performed:
- forwarding (103) at least the authentication request to a further mobile device comprising at least one biometric sensor; and
- accomplishing (104) biometric verification by the further mobile device and transmitting the verification result to the payment terminal.

2. The method according to claim 1, **characterized in that** the verification metric provides a set of rules indicating whether biometric verification is required regarding the specific transaction request.

3. The method according to claim 1 or 2, **characterized in that** the verification metric considers a set of previous transaction requests.

4. The method according to any one of the preceding claims, **characterized in that** the verification metric provides a threshold indicating a number of transactions and/ or a transaction amount.

5. The method according to any one of the preceding claims, **characterized in that** the verification metric is stored in a memory of the wearable device, the payment terminal and/or the further mobile device.

6. The method according to any one of the preceding claims, **characterized in that** forwarding (103) the verification result is performed wirelessly via the wearable device.

7. The method according to any one of the preceding claims 1 to 5, **characterized in that** forwarding (103) the verification result is performed wirelessly from the further mobile device to the payment terminal.

8. The method according to any one of the preceding claims 1 to 5, **characterized in that** forwarding (103) the verification result is performed via a further computing device using a telecommunications network.

9. The method according to any one of the preceding claims, **characterized in that** the biometric sensor is a camera, a fingerprint sensor, a microphone or a pulse monitor.

10. The method according to any one of the preceding claims, **characterized in that** the wearable device is a piece of clothing, a bracelet, a watch and/or a fitness tracking device.

11. The method according to any one of the preceding claims, **characterized in that** the further mobile device is a smartphone or a laptop computer.

12. The method according to any one of the preceding claims, **characterized in that** a secure element is provided by the wearable device.

13. A communication protocol for performing secure wireless payments using a wearable device, comprising:
-- triggering (100) a payment transaction wirelessly by the wearable device, whereupon a transaction request and an authentication request is transmitted (101) from a payment terminal to the wearable device, **characterized in that** a verification metric is provided indicating (102) whether the following steps are to be performed:
- forwarding (103) at least the authentication request to a further mobile device comprising at least one biometric sensor; and
- accomplishing (104) biometric verification by the further mobile device and transmitting the verification result to the payment terminal.

14. A system for performing secure wireless payments using a wearable device, comprising:
- an interface being arranged to trigger (100) a payment transaction wirelessly by the wearable device, whereupon a transaction request and an authentication request is transmitted (101) from a payment terminal to the wearable device, **characterized in that** a verification metric is provided indicating (102) whether the following structural features are addressed:
- a further interface being arranged to forward (103) at least the authentication request to a further mobile device comprising at least one biometric sensor; and
- a biometric device being arranged to accomplish (104) biometric verification by the further mobile device and to transmit the verification result to the payment terminal.

15. A computer program product being arranged to perform a method in accordance with any one of the preceding claims 1 to 12.
